# EUROPÄISCHE PATENTSCHRIFT

(11) **EP 2 841 294 B1**
(45) Veröffentlichungstag und Bekanntmachung des Hinweises auf die Patenterteilung: **24.07.2019**
(21) Anmeldenummer: 13719388.4
(22) Anmeldetag: 18.04.2013
(51) Int. Cl.: B60L 53/16, B60L 53/65, B60L 3/00, B60L 3/04, B60L 53/10

(54) **VERFAHREN ZUR VORBEREITUNG EINER ENERGIEVERSORGUNG EINES FAHRZEUGS**
METHOD FOR PREPARATION OF POWER SUPPLY OF A VEHICLE
PROCÉDÉ POUR PRÉPARATION D'ALIMENTATION D'ÉNERGIE D'UN VÉHICULE

(30) Priorität: 23.04.2012 DE 102012007906
(43) Veröffentlichungstag der Anmeldung: 04.03.2015
(73) Patentinhaber: AUDI AG, 85045 Ingolstadt (DE)
(72) Erfinder: ZAKI, Sami, 93059 Regensburg (DE); SCHALLI, Niklas, 81825 München (DE)
(74) Vertreter: Herbst, Matthias Heinz
(86) Internationale Anmeldenummer: PCT/EP2013/001148
(87) Internationale Veröffentlichungsnummer: WO 2013/159882

(56) Entgegenhaltungen:
- WO-A2-2011/006775
- DE-A1-102009 025 302
- US-A1- 2011 169 447

## Beschreibung

Die Erfindung betrifft ein Verfahren zur Vorbereitung einer elektrischen Energieversorgung eines eine Versorgungseinrichtung aufweisenden Fahrzeugs, insbesondere eines Elektro- oder Hybridfahrzeugs, mit einer wenigstens eine Versorgungsspannung zur Verfügung stellenden Versorgungsvorrichtung, welches Fahrzeug und welche Versorgungsvorrichtung getrennt voneinander ausgeführt und mittels einer Steckkontaktierung zwischen der Versorgungseinrichtung des Fahrzeugs und der Versorgungsvorrichtung lösbar elektrisch miteinander verbindbar sind.

Damit ein Elektro- oder Hybridfahrzeug schnell mit elektrischer Energie versorgt werden kann, um z.B. einen Energiespeicher des Fahrzeugs, beispielsweise eine Batterie, schnell wieder aufladen zu können, gibt es Schnellversorgungsvorrichtungen, sogenannte Ladevorrichtungen bzw. Schnellladevorrichtungen, welche zumeist als Ladesäule ausgebildet sind.

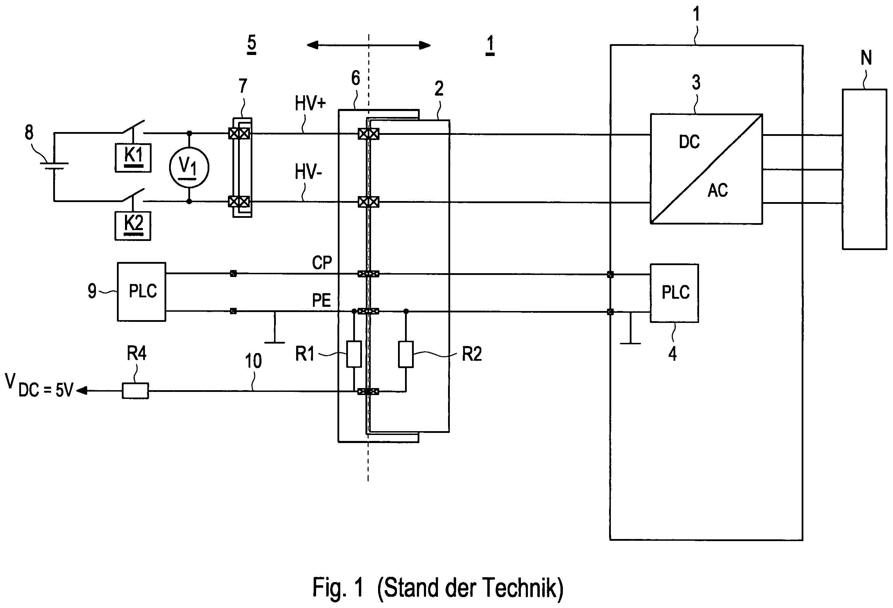

So haben z. B. gängige DC-Schnellladesäulen einen Ausgangsspannungsbereich von 0 bis 1500V DC, d.h. sie können Ladespannungen zwischen 0 und 1500V als Gleichspannung zur Verfügung stellen. Zum Laden einer Batterie eines Elektrofahrzeugs werden das Elektrofahrzeug und die DC-Schellladesäule beispielsweise über einen Steckkontakt elektrisch miteinander verbunden. FIG 1 zeigt in schematischer Weise eine solche elektrische Verbindung bzw. Anordnung.

Die DC-Schnellladesäule 1 weist einen Stecker 2 auf, der mit einem AC/DC-Konverter 3 und einer PLC-Komponente 4 verbunden ist. Der AC/DC-Konverter 3 ist wiederum mit einem Netzanschluss N verbunden.

Das Elektrofahrzeug 5 umfasst eine mit dem Stecker 2 zusammenwirkende Ladedose 6, die über HV-Leitungen HV+ und HV- (HV = Hochvolt) mit einer HV-Steckvorrichtung 7 verbunden ist. Die HV-Steckvorrichtung 7 ist über Schütze K1 und K2 mit der zu ladenden Batterie 8 verbindbar. Des Weiteren ist die Ladedose 6 mit einer PLC-Komponente 9 des Fahrzeugs verbunden. Als weitere Hardware-Leitung ist die sogenannte PRX-Leitung 10 bzw. Proximity-Leitung fahrzeugseitig vorhanden.

Zum Laden der Batterie 8 teilt das Elektrofahrzeug 5 in einer Initialisierungsphase des DC-Ladens via Power-Line-Kommunikation (PLC = Power Line Communication) der DC-Schnellladesäule 1 die zulässige maximale Ladespannung und die Sollspannung, also den nach dem Ladevorgang zu erreichende Spannungswert, der Batterie 8 des Fahrzeugs 5 mit. Die DC-Schnellladesäule 1 stellt daraufhin die gewünschte Ladespannung für das Fahrzeug 5 entsprechend ein. Das Fahrzeug 5 erkennt bzw. misst die anliegende Ladespannung mit Hilfe eine Voltmeters V₁ und schließt die fahrzeugseitigen Schütze K1 und K2, wenn die anliegende Spannung der angeforderten Ladespannung entspricht.

Nachteilig an der Kommunikation via PLC zwischen einer Ladesäule bzw. einer Versorgungsvorrichtung und einem Fahrzeug ist, dass die Kommunikation nicht als sicherheitsrelevant eingestuft ist. Durch Fehler bei der Kommunikation zwischen der Ladesäule und dem Fahrzeug oder durch Fehler in der Ladesäule selbst kann es daher dazu kommen, dass die Ladesäule eine zu hohe Ladespannung, z.B. 1500 V ausgibt bzw. an das Fahrzeug anlegt, obwohl eine niedrigere Ladespannung angefordert wurde.

Daher müssen vorliegend die an der Ladung der Batterie 8 beteiligten Komponenten des Fahrzeugs 5 aus Sicherheitsgründen auf eine Spannung von 1500V ausgelegt werden. Typischerweise in Fahrzeugen verwendete Komponenten verfügen jedoch nicht über diese Spannungsfestigkeit. Für eine Batterie 8 liegt der typische Spannungsbereich bei bis zu 500V. Die fahrzeugseitigen HV-Leitungen HV+ und HV- sind typischerweise für einen Spannungsbereich von bis zu 600V ausgelegt. Die fahrzeugseitigen Schütze K1 und K2 sowie die fahrzeugseitige HV-Steckvorrichtung 7 sind typischerweise für einen Spanungsbereich bis 850V ausgelegt.

Durch eine Auslegung der genannten Komponenten von bis zu 1500V erhöhen sich nicht nur die Kosten und das Gewicht für das Fahrzeug, sondern es wird auch ein entsprechender Bauraum im Fahrzeug für die entsprechend voluminöseren Komponenten benötigt.

In der DE 10 2009 025 303 A1 ist ein Verfahren zur Kommunikation mit einem Elektrofahrzeug beschrieben, umfassend ein Generieren eines ersten vorbestimmten Gleichspannungspegels auf einem Pilotleiter, ein Erkennen des Bestehens einer elektrischen Verbindung mit einem Elektrofahrzeug durch Erfassen eines zweiten vorbestimmten Gleichspannungspegels auf dem Pilotleiter, ein Aussenden eines Auslösesignals auf dem Pilotleiter, ein Erfassen eines Fahrzeugidentifikationssignals auf dem Pilotleiter und eine Freigabe der Stromversorgung auf einem Leistungsleiter.

Aus der US 5,548,200 sind eine Ladestation sowie ein Verfahren zum Laden einer Batterie eines Fahrzeugs bekannt, wobei die Ladeenergiezufuhr zu der Batterie des Elektrofahrzeugs bewerkstelligt werden kann, unabhängig davon, welche Art von Lade-Controller sich im Fahrzeug befindet und der Elektrofahrzeug-Batterie zugeordnet ist.

In der US 2011/169447 A1 ist gezeigt, dass ein Kraftfahrzeug über einen Stecker mit einer Versorgungsvorrichtung verbunden werden kann. Über einen Anschluss des Steckers wird über ein Pilotkontrollsignal eine Zwei-Wege-Kommunikation zwischen dem Kraftfahrzeug und der Versorgungsvorrichtung ermöglicht. Mittels des Pilotkontrollsignals wird eine Ladesteuereinrichtung im Kraftfahrzeug dazu ausgelegt, den maximalen Wechselstrom zu bestimmen, welcher von der Ladevorrichtung bereitgestellt wird. Außerdem wird die Ladevorrichtung mittels des Pilotkontrollsignals dazu ausgelegt herauszufinden, ob das Fahrzeug bereit zum Laden ist. Außerdem wird anhand eines sogenannten Sicherheitspilotsignals, welches über einen Erdungspfad des Steckers läuft, festgestellt, ob der Erdungspfad fehlerhaft ist. Bei einem fehlerhaften Erdungspfad wird der Energiefluss zu dem Kraftfahrzeug unterbrochen.

Gegenstand des Dokuments DE 10 2009 025302 A1 ist es, bei einem Ladeverfahren ergänzende Ladeparameter, beispielsweise eine Identität des Elektrofahrzeugs sowie die Identität der Ladestation, auszutauschen. Durch diesen Austausch der ergänzenden Ladeparameter kann eine benutzerbezogene Abrechnung ermöglicht werden.

Gegenstand des Dokuments WO 2011/006775 A2 ist es, im Rahmen eines Ladevorgangs eines Elektrofahrzeugs an einer Ladestelle eine einfache Möglichkeit zur Verriegelung beziehungsweise Entriegelung einer mechanischen Kopplung zwischen einem Ladekabel und der Ladestelle zu ermöglichen. Dazu soll die mechanische Kopplung mittels einer Kommunikation zwischen Fahrzeug und Ladestelle automatisch entriegelt beziehungsweise verriegelt werden.

Der Erfindung liegt die Aufgabe zugrunde, ein Verfahren der eingangs genannten Art derart anzugeben, dass die Kommunikation zwischen einer Versorgungseinrichtung eines Fahrzeugs und einer elektrischen Versorgungsvorrichtung verbessert wird.

Nach der Erfindung wird diese Aufgabe gelöst durch ein Verfahren zur Vorbereitung einer elektrischen Energieversorgung eines eine Versorgungseinrichtung aufweisenden Fahrzeugs mit einer wenigstens eine Versorgungsspannung zur Verfügung stellenden Versorgungsvorrichtung, welches Fahrzeug und welche Versorgungsvorrichtung getrennt voneinander ausgeführt und mittels einer Steckkontaktierung zwischen der Versorgungseinrichtung des Fahrzeugs und der Versorgungsvorrichtung lösbar elektrisch miteinander verbindbar sind, bei dem im Zuge der Vorbereitung der Energieversorgung nach der elektrischen Verbindung zwischen der Versorgungseinrichtung des Fahrzeugs und der Versorgungsvorrichtung die Versorgungsvorrichtung über einen ersten Kommunikationsweg in Form einer über die Steckkontaktierung geschlossenen Leitung eine die Spannungsklasse des Fahrzeugs charakterisierende bestimmte Spannung ermittelt und basierend auf der ermittelten bestimmten Spannung die Spannungsklasse des Fahrzeugs identifiziert, und bei dem die Versorgungsvorrichtung über einen zweiten Kommunikationsweg in Form einer Power-Line-Kommunikation die ermittelte Spannungsklasse an die Versorgungseinrichtung des Fahrzeugs zurückmeldet.

Erfindungsgemäß erfolgt also nicht mehr nur eine Kommunikation über einen Kommunikationsweg zwischen der Versorgungsvorrichtung und der Versorgungseinrichtung des Fahrzeugs, sondern es steht neben der Power-Line-Kommunikation ein zweiter bzw. alternativer Kommunikationsweg in Form einer Hardwareleitung zur Verfügung. Auf diese Weise kann sichergestellt werden, dass durch bidirektionale Kommunikation auf zwei verschiedenen Kommunikationswegen ein Fahrzeug mit der angeforderten Versorgungsspannung versorgt wird bzw. es kann ggf. der Versorgungsvorgang bei widersprüchlichen Angaben aus unterbunden werden. Für die Ausstattung von Fahrzeugen, insbesondere von Komponenten einer Versorgungseinrichtung des Fahrzeugs bedeutet dies, dass diese nicht überdimensioniert werden müssen, um im Falle eines Fehlers beim Anlegen einer Versorgungsspannung eine Beschädigung der Komponenten zu verhindern.

Die Erfindung sieht vor, dass die Versorgungseinrichtung des Fahrzeugs mittels Power-Line-Kommunikation den Wert der Versorgungsspannung, die maximal zur Energieversorgung des Fahrzeugs angelegt werden darf, an die Versorgungsvorrichtung übermittelt, die Versorgungsvorrichtung den der identifizierten Spannungsklasse zugeordneten maximalen Wert der Versorgungsspannung mit dem übermittelten Wert der Versorgungsspannung, die maximal zur Energieversorgung des Fahrzeugs angelegt werden darf, vergleicht und bei dem die Versorgungsvorrichtung in der Vorbereitungsphase der Energieversorgung eine Fortsetzung des Energieversorgungsvorgangs zulässt, wenn der der identifizierten Spannungsklasse zugeordnete maximale Wert der Versorgungsspannung kleiner oder gleich dem übermittelten Wert der Versorgungsspannung ist, die maximal zur Energieversorgung des Fahrzeugs angelegt werden darf. Auf diese Weise wird bereits auf Seiten der Versorgungsvorrichtung das Anlegen einer zu hohen Versorgungsspannung verhindert.

Nach einer Variante der Erfindung wird die die Spannungsklasse des Fahrzeugs charakterisierende Spannung fahrzeugseitig durch eine Spanungsquelle der Versorgungseinrichtung des Fahrzeugs erzeugt.

Alternativ wird nach einer anderen Variante der Erfindung die die Spannungsklasse des Fahrzeugs charakterisierende, bestimmte Spannung durch den Spannungsabfall an einem Widerstände aufweisenden Spanungsteiler erzeugt.

Nach einer Ausgestaltung der Erfindung erfolgt die elektrische Energieversorgung zum Laden eines elektrischen Energiespeichers des Fahrzeugs. Die elektrische Energieversorgung kann jedoch auch dazu vorgesehen sein andere Komponenten des Fahrzeugs mit elektrischer Energie zu versorgen, beispielsweise eine Vorrichtung zur Klimatisierung des Innenraums des Fahrzeugs.

Gemäß einer Ausführungsform der Erfindung wird der fahrzeugseitige Abschnitt der Leitung durch eine Proximity -Leitung der Versorgungseinrichtung des Fahrzeugs gebildet. Diese wird bei der Verbindung der Versorgungseinrichtung des Fahrzeugs mit der Versorgungsvorrichtung mit einer Verbindungsleitung der Versorgungsvorrichtung kontaktiert, mit der vorzugsweise ein Voltmeter verbunden ist.

Nach einer weiteren Variante der Erfindung weist zur Ausführung des Verfahrens sowohl die Versorgungseinrichtung des Fahrzeugs als auch die Versorgungsvorrichtung jeweils eine Steuereinrichtung auf, bei der es sich um eine programmgesteuerte Recheneinrichtung handelt.

Eine Ausgestaltung der Erfindung sieht vor, dass die Versorgungsvorrichtung mehrere Versorgungsspannungen, seien es Gleich- und/oder Wechselspannungen, unterschiedlicher Höhe zur Verfügung stellen kann.

Ein Ausführungsbeispiel der Erfindung ist in den beigefügten schematischen Zeichnungen dargestellt. Es zeigen:
- FIG 1: eine Anordnung nach dem Stand der Technik und
- FIG 2: eine Anordnung zur Ausführung des erfindungsgemäßen Verfahrens.

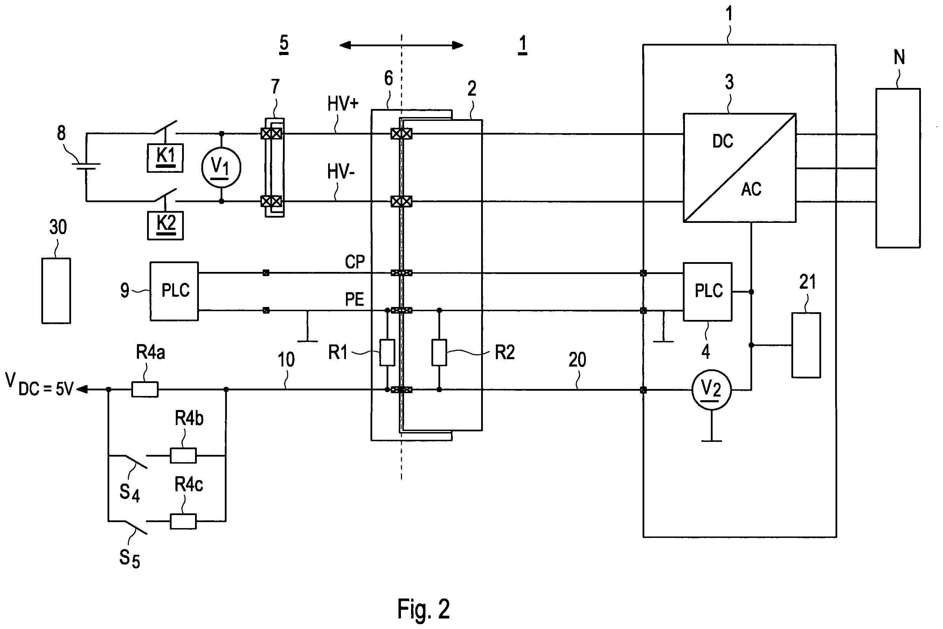

Die in FIG 2 gezeigte Anordnung entspricht in ihrer Grundstruktur der in FIG 1 gezeigten Anordnung, weshalb gleiche bzw. baugleiche Komponenten mit gleichen Bezugszeichen versehen sind.

Im Falle des vorliegenden Ausführungsbeispiels der Erfindung wird das erfindungsgemäße Verfahren exemplarisch anhand des DC-Ladens eines Energiespeichers 8 eines Elektrofahrzeugs 5 beschrieben.

Die Versorgungsvorrichtung 1 bzw. Ladevorrichtung 1 ist in Form einer Ladesäule 1, insbesondere als DC-Schnellladesäule 1 ausgebildet, die im Falle des vorliegenden Ausführungsbeispiels der Erfindung drei Gleichspannungen bzw. Ladespannungen U₁ bis maximal 600V, U₂ bis maximal 1000V und U₃ bis maximal 1500V zur Verfügung stellen kann, wodurch drei Spannungsklassen festgelegt werden bzw. drei Klassen von Fahrzeugen, deren Energiespeicher mit der Ladesäule 1 geladen werden können.

Im Unterschied zu der in FIG 1 gezeigten Anordnung weist die Ladesäule 1 der FIG 2 eine zusätzliche Verbindungsleitung 20 sowie ein mit der Verbindungsleitung 20 verbundenes Voltmeter V₂ auf. Außerdem weist die Ladesäule 1 eine Steuereinrichtung 21 zur ladesäulenseitigen Steuerung eines Ladevorgangs auf, die mit den erwähnten Komponenten der Ladesäule 1 zusammenwirkt bzw. diese ansteuert.

Die Versorgungseinrichtung bzw. im Falle des vorliegenden Ausführungsbeispiels der Erfindung die Ladeeinrichtung des Elektrofahrzeugs 5 umfasst vorliegend die Ladedose 6, die HV-Leitungen HV+, HV-, die HV-Steckvorrichtung 7, das Voltmeter V₁, die Schütze K1, K2, einen Energiespeicher in Form der Batterie 8, die PLC-Komponente 9, die PRX-Leitung 10 sowie Widerstände R1, R4a, R4b und R4c. Die aufgeführten Komponenten sind zur Erläuterung des erfindungsgemäßen Verfahrens im Übrigen nur exemplarisch zu verstehen. So können die Schütze K1 und K2 beispielsweise auch durch andere Trenneinrichtungen ausgeführt sein.

Im Falle des vorliegenden Ausführungsbeispiels der Erfindung sind dem Widerstand R4a die Widerstände R4b und R4c mittels der Schalter S₄ und S₅ parallel schaltbar. Außerdem umfasst die Ladeeinrichtung des Elektrofahrzeugs 5 eine Steuereinrichtung 30 zur fahrzeugseitigen Steuerung eines Ladevorgangs, die mit den erwähnten Komponenten der Ladeeinrichtung des Fahrzeugs 5 zusammenwirkt bzw. diese ansteuert.

Zum Vorbereitung des Ladens der Batterie 8 werden das Fahrzeug 5 bzw. die Ladeeinrichtung des Fahrzeugs 5 und die Ladesäule 1 über die Ladedose 6 und den Stecker 2 mechanisch und elektrisch miteinander verbunden, wodurch sich die in FIG 2 gezeigten elektrischen Kontakte ergeben.

Über die PRX-Leitung 10 und die Verbindungsleitung 20, die einen ersten Kommunikationsweg darstellen, wird der Ladesäule 1 bzw. der Steuereinrichtung 21 der Ladesäule 1 in der Initialisierungsphase des Ladevorgangs die Spannungsklasse des Fahrzeugs 5 vom Fahrzeug 5 mitgeteilt, also ob das Fahrzeug zu der zu U₁, zu der zu U₂ oder zu der zu U₃ gehörigen Spannungsklasse gehört. Dies erfolgt derart, dass eine bestimmte Spannung an dem durch die definiert gewählten Widerstände R1, R2 und R4a gebildeten Spannungsteiler anliegt. Im Fahrzeug 5 kann die an dem Spannungsteiler angelegte bzw. abfallende bestimmte Spannung selbst zu Diagnosezwecken durch die Steuereinrichtung 30 ausgewertet werden.

In der Ladesäule 1 erfolgt die Auswertung der an dem Spannungsteiler anliegenden bzw. abfallenden bestimmten Spannung mit dem Voltmeter V₂ gesteuert durch die Steuereinrichtung 21. Basierend auf der ermittelten bestimmten Spannung begrenzt die Steuereinrichtung 21 der Ladesäule 1 die vorgesehene Ladespannung zum Laden der Batterie 8 des Fahrzeugs 5 auf einen bestimmten Ladespannungswert und zwar auf den maximalen Ladespannungswert der übermittelten Spannungsklasse des Fahrzeugs 5, vorliegend auf die Ladespannung U₁.

Auf einem zweiten Kommunikationsweg, der PLC (Power Line Communication), übermittelt die Ladesäule 1 mittels der PLC-Komponente 4 und gesteuert durch die ladesäulenseitige Steuereinrichtung 21 die mit V₂ ermittelte Spannungsklasse des Fahrzeugs 5 zurück an das Fahrzeug 5 bzw. die PLC-Komponenten 9 des Fahrzeugs 5 und somit an die fahrzeugseitige Steuereinrichtung 30.

Im Falle des vorliegenden Ausführungsbeispiels übermittelt daraufhin die fahrzeugseitige Steuereinrichtung 30 via PLC die Spannung an die Ladesäule 1 bzw. die ladesäulenseitige Steuereinrichtung 21, die maximal zum Laden der Batterie 8 an die Ladeeinrichtung des Fahrzeugs 5 angelegt werden darf.

Die Ladesäule 1 bzw. die ladesäulenseitige Steuereinrichtung 21 vergleicht den an der Ladesäule 1, basierend auf der mitgeteilten Spannungsklasse des Fahrzeugs 5 eingestellten bestimmten Ladespannungswert mit dem via PLC vom Fahrzeug 5 zur Ladesäule 1 übertragenen maximal zulässigen Ladespannungswert für die Ladung der Batterie 8 des Fahrzeugs 5. Ist der bestimmte Ladespannungswert, der an der Ladesäule 1 eingestellt ist, kleiner als der oder gleich mit dem via PLC übermittelten Spannungswert der maximal zulässigen Ladespannung, gibt die Ladesäule 1 bzw. die ladesäulenseitige Steuereinrichtung 21 das Laden der Batterie 8 des Fahrzeugs 5 mit dem eingestellten bestimmten Ladespanungswert in der Initialisierungsphase des Ladevorgangs frei.

Ist jedoch der bestimmte Ladespannungswert, der an der Ladesäule 1 eingestellt ist, größer als der via PLC übermittelte Spannungswert der maximal zulässigen Ladespannung, verhindert die Ladesäule 1 bzw. die ladesäulenseitige Steuereinrichtung 21 das Laden der Batterie 8 des Fahrzeugs 5.

Es wird also deutlich, dass im Zuge des beschriebenen Verfahrens zunächst basierend auf der an dem durch die Widerstände R1, R2 und R4a gebildeten Spannungsteiler abfallenden bestimmten Spannung der Ladesäule 1 die Spanungsklasse des Fahrzeugs 5 mitgeteilt wird. Die Werte der Widerstände R1, R2 und R4a sind also zur Identifizierung der Spannungsklasse des Fahrzeugs definiert gewählt bzw. zu wählen. Insbesondere der Wert des Widerstandes R4a wird sich in Abhängigkeit von der Spanungsklasse des jeweiligen Fahrzeugs für Fahrzeuge unterschiedlicher Spanungsklassen unterscheiden.

Im Falle des vorliegenden Ausführungsbeispiels der Erfindung ist, wie bereits vorstehend beschrieben, eine Parallelschaltung der Widerstände R4a, R4b und R4c durch wahlweise Betätigung der Schalter S₄ und S₅ möglich. Auf diese Weise kann im Zusammenspiel mit der Ladesäule 1 überprüft werden, ob die Ladesäule 1 tatsächlich bei einer Veränderung des Gesamtwiderstandes unterschiedliche Spannungsklassen erkennt und an das Fahrzeug entsprechend zurückmeldet. Durch die wahlweise Betätigung der Schalter S₄ und S₅ kann also in Form einer Sicherheitsabfrage die Funktionsfähigkeit der Ladesäule geprüft werden. Die Betätigung der Schalter S₄, S₅ erfolgt fahrzeugseitig durch die Steuereinrichtung 30.

Die Widerstandswerte sind so gewählt, dass die Ladesäule 1
- die Spanungsklasse U₁ bis max. 600V erkennen muss, wenn die Schalter S₄ und S₅ offen sind,
- die Spanungsklasse U₂ bis max. 1000V erkennen muss, wenn der Schalter S₄ geschlossen und der Schalter S₅ offen ist, und
- die Spanungsklasse U₃ bis max. 1500V erkennen muss, wenn die Schalter S₄ und S₅ geschlossen sind.

Über weitere Parallelschaltungen von Widerständen können auch andere Spannungsklassen von Fahrzeugen charakterisiert bzw. identifiziert werden. Da aber ein Fahrzeug seine Spanungsklasse nicht verändert, kann auch jeweils nur ein bestimmter Widerstand R4a mit einem bestimmten Widerstandswert im Fahrzeug vorhanden sein, mit dessen Hilfe die Spanungsklasse des Fahrzeugs ermittelt wird.

Alternativ kann an Stelle eines oder mehrerer Widerstände fahrzeugseitig jeweils eine Spannungsquelle, die eine bestimmte Spannung aufweist, zur Identifizierung der Spanungsklasse des Fahrzeugs vorgesehen sein.

Die Erfindung wurde vorstehend für das Laden einer Batterie eines Fahrzeugs beschrieben. Das erfindungsgemäße Verfahren ist jedoch nicht auf Ladevorgänge von Energiespeichern, seien es beispielsweise Batterien oder Akkumulatoren, beschränkt. Vielmehr dient das erfindungsgemäße Verfahren auch zur Vorbereitung der elektrischen Energieversorgung anderer elektrischer Energieverbraucher bzw. Komponenten eines Fahrzeugs. Beispielsweise dient das Verfahren zur Vorbereitung der elektrischen Energieversorgung einer Vorrichtung zur Klimatisierung des Fahrzeugs.

## Patentansprüche

1. Verfahren zur Vorbereitung einer elektrischen Energieversorgung eines eine Versorgungseinrichtung aufweisenden Fahrzeugs (5) mit einer wenigstens eine Versorgungsspannung zur Verfügung stellenden Versorgungsvorrichtung (1), welches Fahrzeug (5) und welche Versorgungsvorrichtung (1) getrennt voneinander ausgeführt und mittels einer Steckkontaktierung (2, 6) zwischen der Versorgungseinrichtung des Fahrzeugs (5) und der Versorgungsvorrichtung (1) lösbar elektrisch miteinander verbindbar sind, bei dem im Zuge der Vorbereitung der Energieversorgung nach der elektrischen Verbindung zwischen der Versorgungseinrichtung des Fahrzeugs (5) und der Versorgungsvorrichtung (1)
- die Versorgungsvorrichtung (1) über einen ersten Kommunikationsweg in Form einer über die Steckkontaktierung (2, 6) geschlossenen Leitung (10, 20) eine die Spannungsklasse des Fahrzeugs (5) charakterisierende bestimmte Spannung ermittelt und basierend auf der ermittelten bestimmten Spannung die Spannungsklasse des Fahrzeugs (5) identifiziert, **dadurch gekennzeichnet, dass** die Leitung (10, 20) eine zusätzlich zu als Hochvoltleitungen ausgelegten HV-Leitungen (HV+, HV-) des Fahrzeugs (5) bereitgestellte Verbindungsleitung (20) ist und ein Voltmeter (V2) mit der Verbindungsleitung (20) verbunden ist und die die Spannungsklasse des Fahrzeugs (5) charakterisierende, bestimmte Spannung fahrzeugseitig
a) durch eine Spannungsquelle der Versorgungseinrichtung des Fahrzeugs (5) oder
b) durch den Spannungsabfall an einem Widerstände (R1, R2, R4a, R4b, R4c) aufweisenden Spannungsteiler erzeugt wird und wobei ein zweiter Kommunikationsweg in Form einer Power-Line-Kommunikation (4, 9) vorgesehen ist, wobei
- die Versorgungsvorrichtung (1) über den zweiten Kommunikationsweg in Form der Power-Line-Kommunikation (4, 9) die ermittelte Spannungsklasse an die Versorgungseinrichtung des Fahrzeugs (5) zurückmeldet,
- die Versorgungseinrichtung des Fahrzeugs (5) mittels Power-Line-Kommunikation (4, 9) den Wert der Versorgungsspannung, die maximal zur Energieversorgung des Fahrzeugs (5) angelegt werden darf, an die Versorgungsvorrichtung (1) übermittelt,
- die Versorgungsvorrichtung (1) den der identifizierten Spannungsklasse zugeordneten maximalen Wert der Versorgungsspannung mit dem übermittelten Wert der Versorgungsspannung, die maximal zur Energieversorgung des Fahrzeugs (5) angelegt werden darf, vergleicht und
- bei dem die Versorgungsvorrichtung (1) in der Vorbereitungsphase der Energieversorgung eine Fortsetzung des Energieversorgungsvorgangs zulässt, wenn der der identifizierten Spannungsklasse zugeordnete maximale Wert der Versorgungsspannung kleiner oder gleich dem übermittelten Wert der Versorgungsspannung ist, die maximal zur Energieversorgung des Fahrzeugs (5) angelegt werden darf.

2. Verfahren nach Anspruch 1, bei dem die elektrische Energieversorgung zum Laden eines elektrischen Energiespeichers (8) des Fahrzeugs (5) erfolgt.

3. Verfahren nach einem der vorhergehenden Ansprüche, bei dem der fahrzeugseitige Abschnitt der Leitung (10, 20) durch eine Proximity-Leitung (10) der Versorgungseinrichtung des Fahrzeugs (5) gebildet wird.

4. Verfahren nach einem der vorhergehenden Ansprüche, bei dem sowohl die Versorgungseinrichtung des Fahrzeugs (5) als auch die Versorgungsvorrichtung (1) jeweils eine Steuereinrichtung (21, 30) aufweist.

5. Verfahren nach einem der vorhergehenden Ansprüche, bei dem die Versorgungsvorrichtung (1) mehrere Ladespannungen unterschiedlicher Höhe zur Verfügung stellen kann.

## Claims

1. Method for preparing the supply of electrical power to a vehicle (5) having a supply device with a supply device (1) providing at least one supply voltage, said vehicle (5) and said supply device (1) being designed separately from one another and being releasably electrically connected to one another by means of a plug contact (2, 6) between the supply device of the vehicle (5) and the supply device (1), in which method during the preparation of the power supply after the supply device of the vehicle (5) has been electrically connected to the supply device (1)
- the supply device (1) determines, via a first communication path in the form of a pipe (10, 20) closed via the plug contact (2, 6,) a specific voltage which characterises the voltage class of the vehicle (5) and, based on the determined specific voltage, identifies the voltage class of the vehicle (5), **characterised in that** the pipe (10, 20) is a connection pipe (20) provided in addition to HV pipes (HV+, HV-) of the vehicle (5) designed as high-voltage pipes and a voltmeter (V2) is connected with the connection pipe (20) and the specific voltage which characterises the voltage class of the vehicle (5) is generated on the vehicle side
a) by a voltage source of the supply device of the vehicle (5) or
b) by the voltage drop on a voltage divider having resistors (R1, R2, R4a, R4b, R4c)
and wherein a second communication path is provided in the form of a power pipe communication (4, 9), wherein
- the supply device (1) reports back the determined voltage class to the supply device of the vehicle (5) via the second communication path in the form of the power pipe communication (4, 9),
- the supply device of the vehicle (5) transmits the value of the maximum supply voltage which may be applied to supply energy to the vehicle (5), to the supply device (1) by means of power pipe communication (4, 9),
- the supply device (1) compares the maximum value of the supply voltage assigned to the identified voltage class with the transmitted value of the maximum supply voltage which may be applied to supply energy to the vehicle (5), and
- in which the supply device (1) allows a continuation of the energy supply process in the preparation phase of the energy supply, if the maximum value of the supply voltage assigned to the identified voltage class is less than or equal to the transmitted value of the maximum supply voltage which may be applied to supply energy to the vehicle (5).

2. Method according to claim 1, in which the electrical power is supplied to charge an electrical energy store (8) of the vehicle (5).

3. Method according to any one of the preceding claims, in which the vehicle-side section of the pipe (10, 20) is formed by a proximity pipe (10) of the supply device of the vehicle (5).

4. Method according to any one of the preceding claims, in which both the supply device of the vehicle (5) and also the supply device (1) each have a control device (21, 30).

5. Method according to any one of the preceding claims, in which the supply device (1) can make available several charging voltages at different levels.

## Revendications

1. Procédé de préparation d'une alimentation d'énergie électrique d'un véhicule (5) présentant un équipement d'alimentation avec un dispositif d'alimentation (1) mettant à disposition au moins une tension d'alimentation, lequel véhicule (5) et lequel dispositif d'alimentation (1) sont réalisés séparément l'un de l'autre et peuvent être reliés l'un à l'autre de manière électriquement amovible au moyen d'un contact d'enfichage (2, 6) entre l'équipement d'alimentation du véhicule (5) et le dispositif d'alimentation (1), dans lequel dans le cadre de la préparation de l'alimentation d'énergie après la liaison électrique entre l'équipement d'alimentation du véhicule (5) et le dispositif d'alimentation (1)
- le dispositif d'alimentation (1) obtient par le biais d'une première voie de communication sous la forme d'une conduite (10, 20) fermée par le biais du contact d'enfichage (2, 6), une tension déterminée caractérisant la classe de tension du véhicule (5) et identifie sur la base de la tension déterminée obtenue, la classe de tension du véhicule (5), **caractérisé en ce que** la conduite (10, 20) est une conduite de liaison (20) mise à disposition en plus de conduites HV (HV+, HV-) du véhicule (5) conçues en tant que conduites haute tension et un voltmètre (V2) est relié à la conduite de liaison (20) et la tension déterminée, caractérisant la classe de tension du véhicule (5) est générée côté véhicule
a) par une source de tension de l'équipement d'alimentation du véhicule (5) ou
b) par la chute de tension au niveau d'un diviseur de tension présentant des résistances (R1, R2, R4a, R4b, R4c)
et dans lequel une deuxième voie de communication est prévue sous la forme d'une communication Power-Line (4, 9), dans lequel
- le dispositif d'alimentation (1) signale la classe de tension obtenue à l'équipement d'alimentation du véhicule (5) par le biais de la deuxième voie de communication sous la forme de la communication Power-Line (4, 9),
- l'équipement d'alimentation du véhicule (5) transmet la valeur de la tension d'alimentation, qui peut être appliquée au maximum pour l'alimentation d'énergie du véhicule (5), au dispositif d'alimentation (1) au moyen de la communication Power-Line (4, 9),
- le dispositif d'alimentation (1) compare la valeur maximum de la tension d'alimentation associée à la classe de tension identifiée avec la valeur transmise de la tension d'alimentation, qui peut être appliquée au maximum pour l'alimentation d'énergie du véhicule (5) et
- dans lequel le dispositif d'alimentation (1) autorise une poursuite de l'opération d'alimentation d'énergie dans la phase de préparation de l'alimentation d'énergie, lorsque la valeur maximum de la tension d'alimentation associée à la classe de tension identifiée est inférieure ou égale à la valeur transmise de la tension d'alimentation, qui peut être appliquée au maximum pour l'alimentation d'énergie du véhicule (5).

2. Procédé selon la revendication 1, dans lequel l'alimentation d'énergie électrique a lieu pour recharger un accumulateur d'énergie électrique (8) du véhicule (5).

3. Procédé selon l'une quelconque des revendications précédentes, dans lequel le tronçon côté véhicule de la conduite (10, 20) est formé par une conduite de proximité (10) de l'équipement d'alimentation du véhicule (5).

4. Procédé selon l'une quelconque des revendications précédentes, dans lequel aussi bien l'équipement d'alimentation du véhicule (5) que le dispositif d'alimentation (1) présente respectivement un dispositif de commande (21, 30).

5. Procédé selon l'une quelconque des revendications précédentes, dans lequel le dispositif d'alimentation (1) peut mettre à disposition plusieurs tensions de recharge de hauteur différente.
